(19) Europäisches Patentamt
European Patent Office
Office européen des brevets

(11) **EP 3 909 717 B1**

(12) **EUROPEAN PATENT SPECIFICATION**

(45) Date of publication and mention
of the grant of the patent:
**21.08.2024 Bulletin 2024/34**

(21) Application number: **21173616.0**

(22) Date of filing: **12.05.2021**

(51) International Patent Classification (IPC):
**B24B 37/005** (2012.01) **B24B 37/013** (2012.01)
**B24B 49/12** (2006.01) **G01B 11/06** (2006.01)
**H01L 21/304** (2006.01)

(52) Cooperative Patent Classification (CPC):
**G01B 11/0625; B24B 37/013; B24B 49/12**

(54) **FILM THICKNESS MEASUREMENT APPARATUS, POLISHING APPARATUS, AND FILM THICKNESS MEASUREMENT METHOD**

VORRICHTUNG ZUR MESSUNG DER DICKE EINER FOLIE, POLIERVORRICHTUNG UND VERFAHREN ZUR MESSUNG DER DICKE EINER FOLIE

APPAREIL DE MESURE DE L'ÉPAISSEUR D'UN FILM, APPAREIL DE POLISSAGE ET PROCÉDÉ DE MESURE DE L'ÉPAISSEUR D'UN FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2020 JP 2020085008**

(43) Date of publication of application:
**17.11.2021 Bulletin 2021/46**

(73) Proprietor: **EBARA CORPORATION**
**Ota-ku,**
**Tokyo 144-8510 (JP)**

(72) Inventors:
• **SATORI, Hirotaka**
**Tokyo, 144-8510 (JP)**
• **ISHII, Yu**
**Tokyo, 144-8510 (JP)**
• **KIMBA, Toshifumi**
**Tokyo, 144-8510 (JP)**
• **KINOSHITA, Masaki**
**Tokyo, 144-8510 (JP)**

(74) Representative: **Schmidbauer, Andreas Konrad**
**Wagner & Geyer Partnerschaft mbB**
**Patent- und Rechtsanwälte**
**Gewürzmühlstrasse 5**
**80538 München (DE)**

(56) References cited:
**JP-A- H1 158 225    US-A1- 2013 033 698**

**Description**

The present invention relates to a film thickness measurement apparatus, a polishing apparatus, and a film thickness measurement method.

In the prior art, in order to flatten an inorganic insulation film formed on a substrate, for example, chemical mechanical polishing (CMP) is performed (for example, see PTLs 1 to 3). A polishing apparatus used for such polishing has a polishing table that holds a polishing pad and rotates and a substrate holding member that holds the substrate and rotates while pressing the film of the substrate against the polishing pad. In addition, this polishing apparatus polishes the film as the polishing table and the substrate holding member rotate in the presence of slurry.

In the prior art, a film thickness measurement apparatus for optically measuring data regarding a film thickness of an inorganic insulation film during polishing of the film using a polishing apparatus is known (for example, see PTLs 1 to 3). Specifically, such a film thickness measurement apparatus projects emitted light toward the inorganic insulation film during polishing using the polishing apparatus, and measures data regarding the film thickness on the basis of the intensity of the reflected light reflected from the inorganic insulation film. In addition, this polishing apparatus performs polishing while measuring the data regarding the film thickness of the inorganic insulation film using the film thickness measurement apparatus, determines that the polishing end point has been reached as the film thickness reaches a predetermined value, and terminates the polishing.

In addition, in the prior art, as a film formed on a substrate, a film including a plurality of wiring patterns is known (for example, see PTL 4). Furthermore, as such a film including the wiring patterns, a film formed of an organic compound (that is, organic insulation film) is known. The CMP is also performed to flatten such an organic insulation film (for example, see PTL 5).

JP H11 58225 A discloses a semiconductor wafer polishing end point detecting device, in which laser light is condensed onto a multilayer wiring pattern provided wafer by an objective lens, and the reflected light is divided into three optical axes. The interference light quantities on the front surface of a SiO2 film and the front surface of a wiring pattern under it are measured by an interference light quantity measuring optical axis. Since the wafer in polishing is rotated and vertically moved, reflected light from respective layers of the multilayer wiring pattern provided wafer is intermingled in an interference light quantity signal. Confocal optical systems are respectively constituted on a wiring pattern detecting optical axis and a layer judging optical axis, the detection of the presence or absence of the wiring pattern by the focusing surface of the objective lens and the judgement for judging whether the wiring pattern is on an upper layer or a lower layer are performed, and therefore, the interference light quantity on only the topmost wiring pattern is extracted. Since this interference light quantity value is changed in a sinusoidal manner according to the change of the thickness of the SiO2 film, to be generated by the progress of polishing, the waves of the change are counted, and the polishing end point is detected.

PTL 1: JP 2010-23210 A
PTL 2: JP 2001-235311 A
PTL 3: JP 10-229060 A
PTL 4: JP 2001-21317 A
PTL 5: JP 6606309 B

Meanwhile, the film thickness of the organic insulation film is thicker than that of the inorganic insulation film in many cases. For this reason, if the film thickness measurement technique of the prior art used for the inorganic insulation film is directly applied to the organic insulation film, the light amount of reflected light from the wiring patterns may be insufficient. In this case, it may be difficult to obtain data regarding the film thickness during polishing.

In view of the problems described above, it is an object of the present invention to provide a technique capable of suppressing a shortage of the light amount of reflected light from the wiring patterns even when the film thickness is thick. The invention is set out in the appended set of claims.

(Aspect 1)

In order to achieve the object described above, according to claim 2, the spot size of the emitted light is smaller than the minimum width of the wiring patterns. Therefore, it is possible to increase the light amount of the emitted light projected onto the wiring patterns. As a result, it is possible to suppress a shortage of the light amount of the reflected light from the wiring patterns even when the film thickness is thick.

(Aspect 2)

In Aspect 1 described above, the film may be an organic insulation film formed of an organic compound.

According to this aspect, it is possible to suppress a shortage of the light amount of the reflected light from the wiring patterns of the organic insulation film.

(Aspect 3)

In Aspect 1 or 2 described above, the light emitter, the optical condenser, and the light receiver may be arranged in the polishing table, and a transparent window through which the emitted light and the reflected light are transmittable may be arranged in a part of the polishing pad. According to this aspect, it is possible to simplify the configuration of the polishing apparatus to which the film thickness measurement apparatus is applied. As a result, it is possible to reduce the manufacturing cost of the polishing apparatus.

(Aspect 4)

In Aspect 3 described above, the film thickness measurement apparatus may further include a tubular jig for installing a sensor head including the light emitter, the optical condenser, and the light receiver to the polishing table, and the jig may be connected to the polishing table such that the emitted light and the reflected light pass through the inside of the jig. According to this aspect, it is possible to easily keep a constant distance from the sensor head to the substrate. As a result, it is possible to easily adjust the distance from the optical condenser to the substrate into a focal length.

(Aspect 5)

In any one of Aspects 1 to 4 described above, the optical condenser may include a lens. According to this aspect, it is possible to condense the emitted light by using a simple configuration.

(Aspect 6)

In any one of Aspects 1 to 5 described above, the emitted light may have an infrared range wavelength and may be a laser light. According to this aspect, it is possible to increase the light amount of the emitted light projected onto the wiring patterns. As a result, it is possible to increase the light amount of the reflected light from the wiring patterns.

(Aspect 7)

According to claim 1, in any one of Aspects 1 to 6 described above, assuming that the spot size of the emitted light is D ($\mu$m), a spot area of the emitted light is S ($\mu$m$^2$), a peripheral velocity of the light emitter or the optical condenser during polishing of the film is $\omega$ ($\mu$m/sec), a minimum area as a minimum value of areas of respective wiring patterns constituting the plurality of wiring patterns is Smin ($\mu$m$^2$), and an exposure time of the emitted light is t (sec), the exposure time (t) of the emitted light is set so as to satisfy a following Formula (1):

$$(S + D \times \omega \times t) \leq (\alpha \times Smin) \cdots \cdots (1),$$

(where $\alpha$ is a value selected from a range of $0 < \alpha \leq 2$).

According to this aspect, it is possible to restrict the time for which the emitted light is projected onto a portion other than the wiring patterns within an appropriate range. As a result, it is possible to effectively suppress a shortage of the light amount of the reflected light from the wiring patterns.

(Aspect 8)

The object described above is achieved by a polishing apparatus with a film thickness apparatus according to claim 1. Assuming that the spot size of the emitted light is D ($\mu$m), a spot area of the emitted light is S ($\mu$m$^2$), a peripheral velocity of the light emitter or the optical condenser during polishing of the film is $\omega$ ($\mu$m/sec), a minimum area as a minimum value of areas of respective wiring patterns constituting the plurality of wiring patterns is Smin ($\mu$m$^2$), and an exposure time of the emitted light is t (sec), the exposure time (t) of the emitted light is set so as to satisfy a following Formula (1):

$$(S + D \times \omega \times t) \leq (\alpha \times Smin) \cdots \cdots (1),$$

(where $\alpha$ is a value selected from a range of $0 < \alpha \leq 2$).

According to this aspect, it is possible to restrict a time for which the emitted light is projected onto a portion other than the wiring patterns within an appropriate range. As a result, it is possible to suppress a shortage of the light amount of the reflected light from the wiring patterns even when the film thickness is thick.

(Aspect 9)

In order to achieve the object described above, according to the present invention, there is provided a polishing apparatus for polishing a film of a substrate. The film includes a plurality of wiring patterns. The polishing apparatus includes the film thickness measurement apparatus according to any one of Aspects 1 to 8 described above.

According to this aspect, since the film thickness measurement apparatus described above is provided, it is possible to suppress a shortage of the light amount of the reflected light from the wiring patterns even when the film thickness is thick.

(Aspect 10)

In order to achieve the object described above, according to an aspect of the present invention, there is provided a film thickness measurement method includes measuring a film thickness of a film of a substrate by using the film thickness measurement apparatus according to any one of Aspects 1 to 8 described above during the polishing of the film by a polishing apparatus for polishing the film. The film includes a plurality of wiring patterns.

According to this aspect, it is possible to suppress a shortage of the light amount of the reflected light from the wiring patterns even when the film thickness is thick.

Fig. 1 is a configuration diagram schematically illustrating a main configuration of a polishing apparatus according to Embodiment 1.
Fig. 2 is a cross-sectional view illustrating the vicinity of A1 of Fig. 1.
Fig. 3 is a cross-sectional view illustrating a state in which a substrate holding member and a polishing table of Fig. 2 are separated.
Fig. 4 is a plan view illustrating a substrate according to Embodiment 1.
Fig. 5 is a partial cross-sectional view illustrating the substrate according to Embodiment 1.
Fig. 6 is a diagram for explaining configurations of a sensor head and a light-source/spectroscope module of the film thickness measurement apparatus according to Embodiment 1.
Fig. 7 is a cross-sectional view for explaining configurations of a polishing apparatus and a film thickness measurement apparatus of a comparative example.
Fig. 8 is a diagram illustrating how emitted light is projected onto a film in the film thickness measurement apparatus of the comparative example.
Fig. 9 is a diagram illustrating how emitted light is projected onto a film in the film thickness measurement apparatus according to Embodiment 1.
Figs. 10A, 10B, and 10C are explanatory diagrams for explaining Formula (1) according to a modified example of Embodiment 1.

(Embodiment 1)

Hereinafter, a film thickness measurement apparatus 30, a polishing apparatus 10, and a film thickness measurement method according to Embodiment 1 of the present invention will be described with reference to the accompanying drawings. Note that drawings of this application are schematically illustrated in order to facilitate understanding of the features of this embodiment, and the dimensional ratios or the like of each component may not match those of the actual ones. In addition, in the drawings of this application, the XYZ Cartesian coordinates system is illustrated for reference. In this Cartesian coordinates system, the Z direction corresponds to the upper side, and the -Z direction corresponds to the lower side (gravity direction).

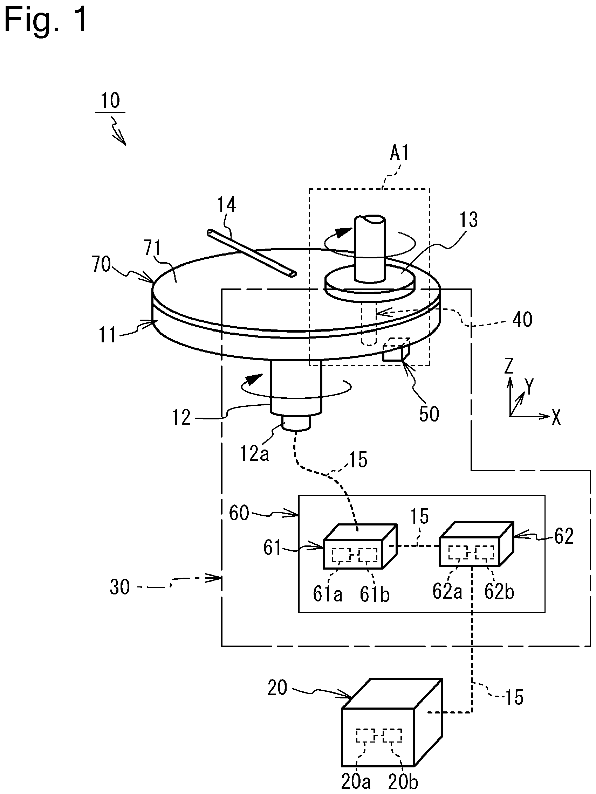

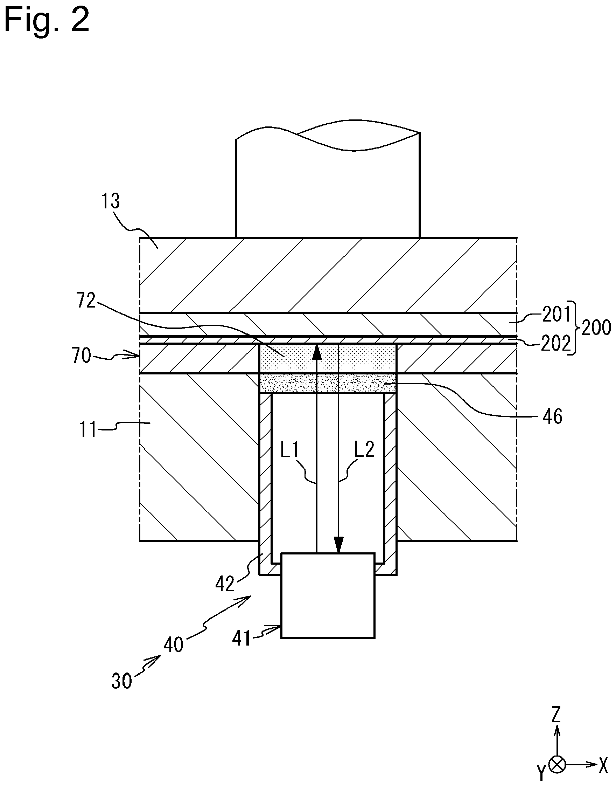

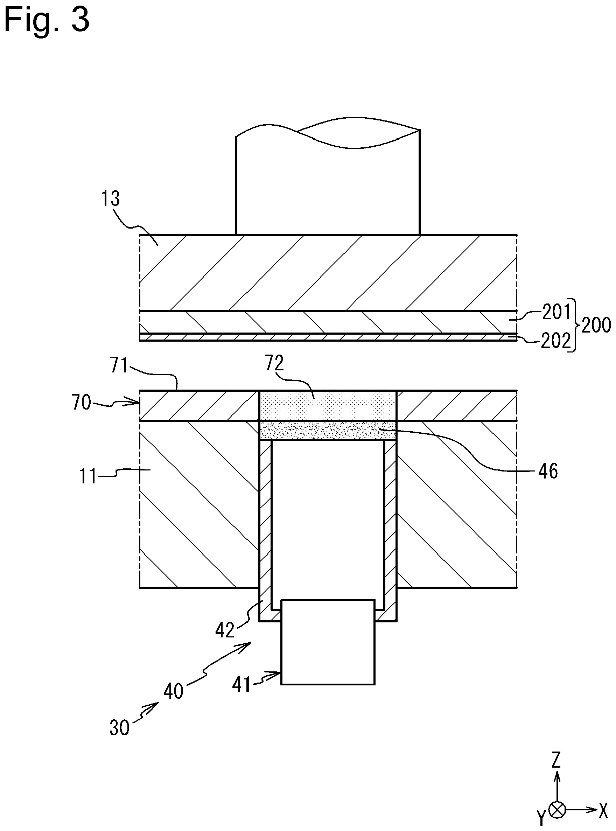

Fig. 1 is a configuration diagram schematically illustrating a main configuration of the polishing apparatus 10 according to this embodiment. The polishing apparatus 10 according to this embodiment is a polishing apparatus capable of performing chemical mechanical polishing (CMP). Specifically, the polishing apparatus 10 illustrated in Fig. 1 has a polishing table 11, a rotation shaft 12, a substrate holding member 13, a slurry supply nozzle 14, a polishing controller 20, and a film thickness measurement apparatus 30. Fig. 2 is a cross-sectional view illustrating the vicinity of A1 of Fig. 1. Fig. 3 is a cross-sectional view illustrating a state in which the substrate holding member 13 and the polishing table 11 of Fig. 2 are separated.

As illustrated in Figs. 1, 2 and 3, the polishing table 11 is a polishing table configured to hold the polishing pad 70 and rotate. Specifically, the polishing table 11 according to this embodiment has a disk-shaped member and a polishing pad 70 attached to the upper surface thereof. The upper surface (front surface) of the polishing pad 70 corresponds to the polishing surface 71. During polishing, a film 202 of the substrate 200, which will be described below, is pressed against the polished surface 71.

The type of the polishing pad 70 is not particularly limited, and may include various polishing pads such as a hard foam type polishing pad, a non-woven fabric type polishing pad, or a suede type polishing pad. The polishing pad 70 is appropriately set depending on the type of the film 202.

As illustrated in Fig. 1, the polishing table 11 is connected to the rotation shaft 12. This rotation shaft 12 is rotationally driven by a drive mechanism (such as a motor). A joint 12a is provided at an end of the rotation shaft 12 opposite to the side of the polishing table 11. This joint 12a has a rotary joint and a rotary connector. The rotational operation of the polishing table 11 is controlled by the polishing controller 20 described below.

As illustrated in Figs. 2 and 3, a transparent window 72 through which emitted light L1 and reflected light L2 described below are transmittable is arranged in a part of the polishing pad 70 according to this embodiment. According to this embodiment, the transparent window 72 has a window member (that is, a transparent window member) formed of a light transmission material, specifically, a transparent material (such as transparent plastic or transparent glass). A position of the transparent window 72 (relative position in the polishing pad 70) is set such that at least a part of the film 202 of the substrate 200 passes above the transparent window 72 when the polishing table 11 rotates to rotate the polishing pad 70. The emitted light L1 condensed by an optical condenser 44 of a sensor head 41 described below transmits through the transparent window 72 and then enters the film 202. In addition, the reflected light L2 reflected from the film 202 transmits through the transparent window 72 and is then received by a light receiver 45 of the sensor head 41.

As illustrated in Fig. 1, the substrate holding member 13 is arranged on the polishing surface 71 of the polishing table 11 during polishing. As illustrated in Figs. 2 and 3, the substrate 200 is installed to the lower surface of the substrate holding member 13. The substrate holding member 13 is configured to rotate while holding the substrate 200 and pressing the film 202 of the substrate 200 against the polishing surface 71 of the polishing pad 70. Note that the substrate holding member 13 may be generally referred to as "top ring", "polishing head", or the like in some cases.

Referring to Fig. 1, the slurry supply nozzle 14 is a nozzle that supplies slurry (specifically, polishing slurry) to the polishing surface 71. The slurry is, for example, a solution containing abrasive grains such as silicon oxide, aluminum oxide, or cerium oxide. The specific type of this slurry is not particularly limited, and may be appropriately set depending on the type of the film 202. Note that the slurry may be supplied not from the upper part of the polishing surface 71 but from the lower part, or may be supplied from both the upper part and the lower part of the polishing surface 71. For example, when the slurry is supplied from the lower part, the slurry may be supplied from a flow path (not shown) extending vertically from a portion near the rotation center of the lower part of the polishing table 11 and an opening (not shown) of the polishing pad 70 (polishing surface 71) communicating with the flow path.

The polishing controller 20 is a controller that controls the operation of the polishing apparatus 10. Specifically, the polishing controller 20 according to this embodiment has a computer. This computer includes a CPU (Central Processing Unit) 20a as a processor, a memory device 20b, and the like. The memory device 20b has a recording medium such as a ROM (Read Only Memory), or a RAM (Random Access Memory). In the polishing controller 20, the CPU 20a as a processor controls the rotational operation of the polishing table 11, the slurry supply operation from the slurry supply nozzle 14, or the like on the basis of a program stored in the memory device 20b to control the operation of the polishing apparatus 10.

In the polishing apparatus 10 described above, each of the polishing table 11 and the substrate holding member 13 rotates in the presence of the slurry to polish the film 202 of the substrate 200 to a desired flat surface.

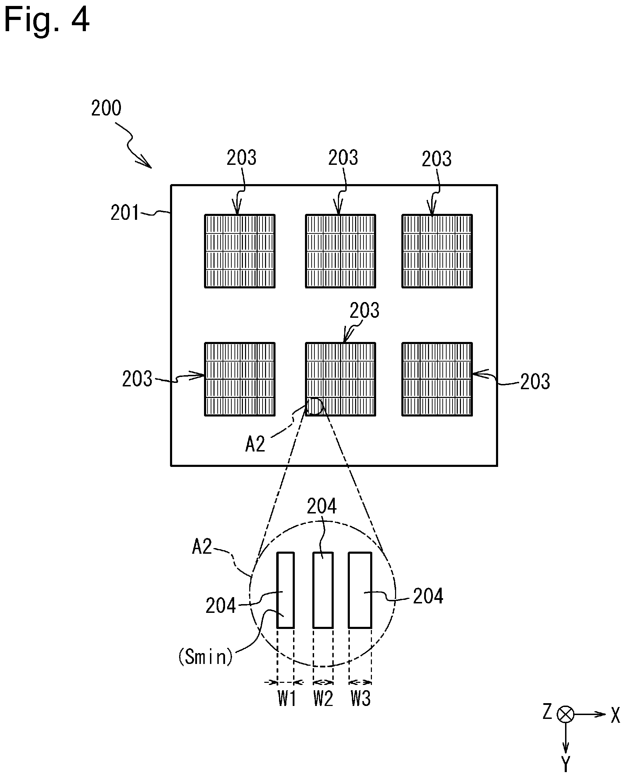

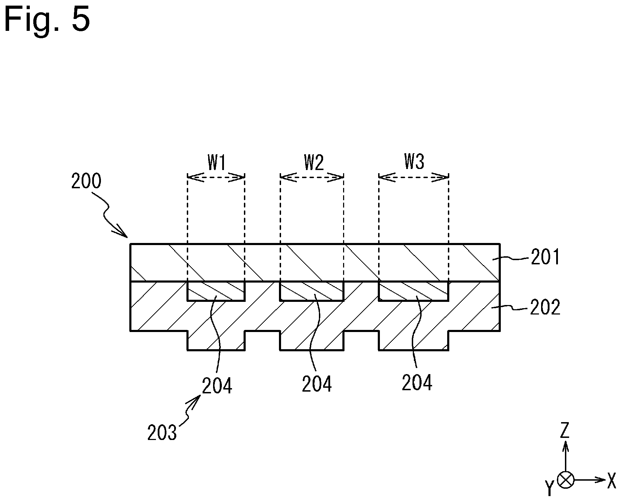

Subsequently, a configuration of the substrate 200 will be described. Fig. 4 is a plan view illustrating the substrate 200. Specifically, Fig. 4 schematically illustrates a state in which the substrate 200 is visually recognized from the bottom. Note that, in Fig. 4, the film 202 described below is not illustrated. In addition, Fig. 4 also shows an enlarged view of the A2 portion of Fig. 4. Fig. 5 is a partial cross-sectional view illustrating the substrate 200. Specifically, Fig. 5 schematically illustrates a cross section of a part of the substrate 200 cut along a surface containing a line normal to the substrate 200.

As illustrated in Fig. 4, the substrate 200 according to this embodiment is, for example, a square substrate. However, the substrate 200 is not limited to such a square substrate, and may have an external shape other than the square shape (such as a circular shape).

As illustrated in Fig. 5, the substrate 200 according to this embodiment has a substrate core 201 and a film 202 arranged on the surface of the substrate core 201. A wiring pattern 203 is included in the film 202.

A material of the substrate core 201 is not particularly limited, and according to this embodiment, a glass-based material is employed as an example. The material of the film 202 is not particularly limited, and an inorganic compound, an organic compound, or the like may be employed. According to this embodiment, an organic compound is employed as an example of the material of the film 202. That is, the film 202 according to this embodiment is an organic insulation film. The type of material of this organic compound is not particularly limited. For example, according to this embodiment, a resin is employed, and polyimide is employed as an example of the resin.

As illustrated in Fig. 4, a plurality of wiring patterns 203 are arranged on the surface of the substrate core 201. As illustrated in Fig. 5, the film 202 is arranged so as to cover the surface of the plurality of wiring patterns 203. Respective wiring patterns 203 have a plurality of wiring patterns 204. The material of the wiring patterns 204 may include any material having conductivity, and the specific type thereof is not particularly limited. According to this embodiment, copper is employed as an example.

The enlarged view of the A2 portion of Fig. 4 and Fig. 5 selectively show three wiring patterns 204 selected from a plurality of wiring patterns 204. The three wiring patterns 204 have widths W1, W2, and W3, respectively. In addition, in respective wiring patterns 204, the X direction refers to the lateral direction, and the Y direction refers to the longitudinal direction. Among the widths of the three wiring patterns 204, the width W1 is the smallest. Furthermore, according to this embodiment, the width W1 is smallest among all the wiring patterns 204 included in the film 202 of the substrate 200.

That is, according to this embodiment, the width W1 corresponds to the "minimum width" as a minimum value of the widths of the respective wiring patterns 204 constituting a plurality of wiring patterns 204. Note that the "width of the wiring pattern" is the length of the wiring pattern in the surface direction (direction on the XY plane), that is, the length in the lateral direction.

The wiring pattern 204 is buried inside the film 202 in the unpolished state (before the CMP). The polishing apparatus 10 according to this embodiment flattens the film 202 by polishing the film 202 of the substrate 200. In polishing of the film 202, the polishing apparatus 10 sets a time point at which the film thickness of the substrate 200 reaches a predetermined value as an end point of the polishing (that is, "polishing end point"). The specific value of the polishing end point is not particularly limited. For example, a value equal to or smaller than the film thickness at which the wiring pattern 204 is exposed on the surface of the film 202 may be set as the polishing end point, or a value larger than the film thickness at which the wiring pattern 204 is exposed on the surface of the film 202 (that is, a value within a range in which the wiring pattern 204 is not exposed on the surface of the film 202) may be set as the polishing end point.

Subsequently, the film thickness measurement apparatus 30 will be described. Returning to Fig. 1, the film thickness measurement apparatus 30 according to this embodiment is an optical film thickness measurement apparatus that optically measures data regarding the film thickness of the film 202 of the substrate 200. In addition, the film thickness measurement apparatus 30 according to this embodiment measures data regarding the film thickness during polishing using the polishing apparatus 10.

Specifically, as illustrated in Fig. 1, the film thickness measurement apparatus 30 according to this embodiment has a sensor module 40, a light-source/spectroscope module 50, and a data processing system 60. The light-source/spectroscope module 50, the data processing system 60, and the polishing controller 20 are electrically connected to each other by the wiring 15. According to this embodiment, the sensor module 40 and the light-source/spectroscope module 50 are arranged in the polishing table 11. The sensor module 40 and the light-source/spectroscope module 50 rotate together with the polishing table 11 as the polishing table 11 rotates.

As illustrated in Figs. 2 and 3, the sensor module 40 has a sensor head 41 and a tubular jig 42.

The jig 42 is a jig for installing the sensor head 41 to the polishing table 11. The jig 42 is connected to the polishing table 11 such that the emitted light L1 and the reflected light L2 pass through the inside of the jig 42. Specifically, the jig 42 according to this embodiment is fitted into a tubular hole provided in the polishing table 11 by way of example. In addition, the upper end surface of the jig 42 according to this embodiment is connected to the lower surface of the glass plate 46 arranged on the lower surface of the transparent window 72. The emitted light L1 and the reflected light L2 pass through the inside of the jig 42 (inside of the tube).

Specifically, the glass plate 46 according to this embodiment has a plate member formed of glass that transmits light, and is connected to the lower surface of the transparent window 72. The upper end surface of the jig 42 according to this embodiment (the opened upper end surface of the tubular jig 42) is connected to the lower surface of the glass plate 46. The glass plate 46 effectively suppresses a foreign object such as slurry from entering the inside of the jig 42 (inside of the tube). Note that the jig 42 is preferably in close contact with the lower surface of the glass plate 46 so as not to form a gap between the jig 42 and the glass plate 46.

Note that Figs. 2 and 3 described above illustrate an example of installation of the jig 42 to the polishing table 11, and the installation type of the jig 42 to the polishing table 11 is not limited to those illustrated in Figs. 2 and 3.

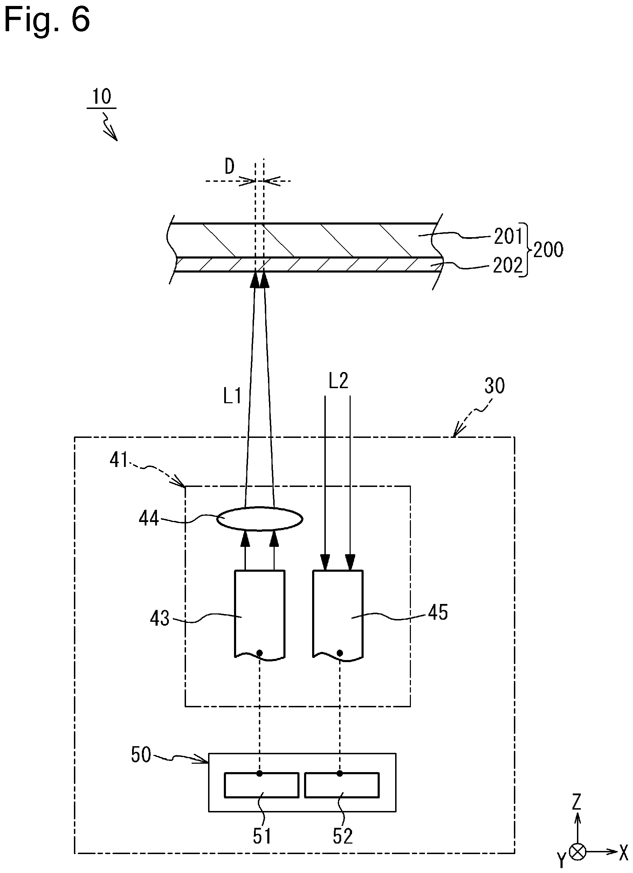

Fig. 6 is a diagram for explaining configurations of the sensor head 41 and the light-source/spectroscope module 50 of the film thickness measurement apparatus 30. The sensor head 41 has a light emitter 43, an optical condenser 44, and a light receiver 45. The light-source/spectroscope module 50 has a light source 51 and a spectroscope 52.

The light emitter 43, the optical condenser 44, and the light receiver 45 are housed in the sensor head 41. The light emitter 43 is a device that projects the emitted light L1 in a predetermined direction during polishing of the film 202 using the polishing apparatus 10. Specifically, the light emitter 43 according to this embodiment projects the emitted light L1 toward the film 202. In addition, the light emitter 43 includes an optical fiber. One end of the optical fiber (the end opposite to the film 202 side) is connected to the light source 51. The light emitted from the light source 51 passes through the optical fiber and is projected as the emitted light L1. Note that, according to this embodiment, the light emitter 43 and the optical condenser 44 are separate components. Alternatively, without limiting to such a configuration, the light emitter 43 and the optical condenser 44 may be an integral component.

The type of the light source 51 is not particularly limited, and may include a halogen lamp, a laser light-emitting device, or the like. According to this embodiment, a laser light-emitting device is employed as an example of the light source 51. In addition, according to this embodiment, the light emitted from the light source 51 has an infrared range wavelength (specifically, a wavelength longer than 780 nm). That is, the emitted light L1 according to this embodiment is laser light having an infrared range wavelength.

The optical condenser 44 is a device that makes the emitted light L1 projected from the light emitter 43 into a predetermined spot size (D ($\mu$m)) and then projects the emitted light L1 onto the film 202. This predetermined spot size (D) is smaller than the "minimum width (W1 ($\mu$m) in this embodiment)" as a minimum value of the widths of the respective wiring patterns 204 constituting a plurality of wiring patterns 204. Note that, according to this embodiment, the spot size (D) refers to the outer diameter of the focusing spot of the emitted light L1. The spot size (D) according to this embodiment is set to a value of 30 $\mu$m or smaller by way of example (in this case, the minimum width (W1) is larger than 30 $\mu$m).

The specific configuration of the optical condenser 44 is not particularly limited as long as it has the functions described above. For example, the optical condenser 44 according to this embodiment includes a lens (that is, a condensing lens).

Specifically, the optical condenser 44 according to this embodiment includes a single lens. The lens as the optical condenser 44 is arranged between the light emitter 43 and the film 202 to condense the emitted light L1 projected from the light emitter 43 into a predetermined spot size (D) and project it onto the film 202.

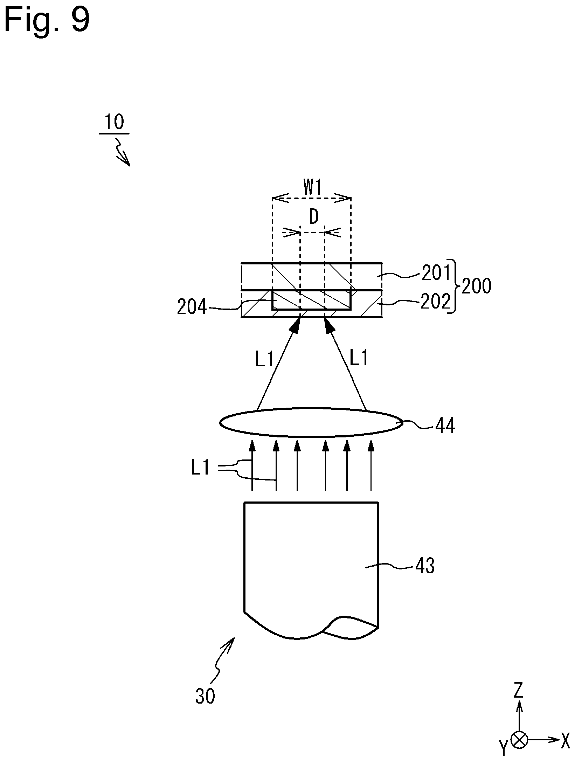

More specifically, a focal length of this lens is set such that a focal point of the emitted light L1 condensed by the lens is positioned on the surface of the film 202 (that is, the polishing surface 71 of the polishing pad 70). In addition, according to this embodiment, the distance from the lens to the film 202 of the substrate 200 is adjusted by using the jig 42 described above. Specifically, the distance from the lens to the film 202 is adjusted by using the jig 42 such that the focal point of the emitted light L1 condensed by the lens is positioned on the surface of the film 202. In addition, the lens is set such that the spot size (D; that is, the minimum spot diameter) of the emitted light L1 condensed by the lens is smaller than the minimum width (W1) of the wiring patterns 204. Note that, although the glass plate 46 and the transparent window 72 described above are not illustrated in Fig. 6 or 9 described below, in practice, the emitted light L1 condensed by the lens passes through the glass plate 46 and the transparent window 72 and then enters the film 202.

Note that the optical condenser 44 includes a single lens according to this embodiment, but the optical condenser 44 is not limited to this configuration. The optical condenser 44 may include a combination of lenses. Alternatively, the optical condenser 44 may include a member other than the lens. As an example of the configuration other than the lens of the optical condenser 44, a parabolic mirror may be employed. In this parabolic mirror, the emitted light L1 projected from the light emitter 43 is condensed to a predetermined spot size (D), and is then projected onto the film 202.

The light receiver 45 is a device that receives the reflected light L2 reflected from the film 202. Specifically, the light receiver 45 according to this embodiment includes an optical fiber. One end of the optical fiber (the end opposite to the film 202 side) is connected to the spectroscope 52.

The spectroscope 52 is a device that disperses the reflected light L2 and converts the intensity of the light having the dispersed wavelength into a digital signal. The configuration of the spectroscope 52 itself is similar to that employed in a film thickness measurement apparatus known in the art as disclosed in documents of the citation list, and details of the spectroscope 52 will not be described.

The digital signal converted by the spectroscope 52 is transmitted to the data processing system 60 (Fig. 1) via the wiring 15. The data processing system 60 is a system that measures data regarding the film thickness of the film 202 on the basis of the intensity of the reflected light L2 received by the light receiver 45. Specifically, the intensity of the reflected light L2 received by the light receiver 45 has a relationship with the film thickness. In this regard, the data processing system 60 measures data regarding the film thickness of the film 202 on the basis of the intensity of the reflected light L2 received by the light receiver 45. Note that, according to this embodiment, the "data regarding the film thickness" may be any data having a relationship with the film thickness ($\mu$m). For example, the "data regarding the film thickness" may be the film thickness itself or an index having a relationship with the film thickness (such as the change amount of the film thickness).

Specifically, as illustrated in Fig. 1, the data processing system 60 according to this embodiment has a first data processing device 61 and a second data processing device 62.

The first data processing device 61 includes a computer having a CPU 61a as a processor, a memory device 61b, and the like. The memory device 61b includes a recording medium such as a ROM or a RAM. The first data processing device 61 executes a data processing for indexing the reflection intensity on the basis of the data transmitted from the spectroscope 52 by operating the CPU 61a on the basis of a program stored in the memory device 61b.

The data processed by the first data processing device 61 is transmitted to the second data processing device 62. The second data processing device 62 includes a computer having a CPU 62a as a processor, a memory device 62b, and the like. The memory device 62b includes a recording medium such as a ROM or a RAM. The second data processing device 62 executes a noise removal processing for the time waveform of the indexed data by operating the CPU 62a on the basis of the program stored in the memory device 62b, and also detects the reflection intensity or characteristic points (such as maximum/minimum differential values or threshold values) by analyzing the waveforms subjected to this noise removal processing. This detected value (detection value) has a relationship with the film thickness. In this regard, the second data processing device 62 calculates and acquires data regarding the film thickness on the basis of this detection value. As described above, the data processing system 60 according to this embodiment measures the data regarding the film thickness.

In addition, the second data processing device 62 according to this embodiment determines whether or not the film thickness has reached a preset polishing end point on the basis of the data measured as described above (that is, the polishing end point of the polishing). When the second data processing device 62 determines that the film thickness has reached the polishing end point, a signal notifying that the polishing end point has been reached (polishing end point signal) is transmitted to the polishing controller 20. Upon receiving this polishing end point signal, the polishing controller 20 terminates the polishing of the polishing apparatus 10 by stopping a drive mechanism (such as a motor) of the polishing apparatus 10.

Note that a data processing algorithm of the data processing system 60 described above (that is, a data processing algorithm for measuring the data regarding the film thickness on the basis of the intensity of reflected light) is similar to those of the data processing devices employed in the film thickness measurement apparatuss known in the art as disclosed in PTLs 1 and 2 described above, and such techniques are applicable. For this reason, details of this data processing will not be described.

Here, the substrate 200 moves relative to the light emitter 43 during polishing. Therefore, when the exposure time of the emitted light L1 in the film thickness measurement apparatus 30 is too long, the time for projecting the emitted light L1 to a portion other than the wiring patterns 204 excessively increases. As a result, it may be difficult to receive the reflected light L2 from the wiring patterns 204. In this regard, the exposure time of the emitted light L1 in the film thickness measurement apparatus 30 is preferably set to be equal to or shorter than a predetermined time, within the range defined in claim 1. The predetermined time for the exposure time may be set such that, for example, it is considered to be difficult to receive the reflected light L2 when the exposure time is longer than this time. This specific value may be determined in advance as appropriate through experiments, simulations, or the like.

According to this embodiment, as an example of this exposure time, a time of 0.1 (msec: millisecond) or shorter (that is, a time selected from a range longer than 0.0 (msec) and shorter than 0.1 (msec)) is employed. However, this time is just an example and is not limited thereto.

The film thickness measurement method according to this embodiment is a method for measuring a film thickness of the film 202 using the film thickness measurement apparatus 30 described above, and is implemented by the film thickness measurement apparatus 30 described above. That is, the film thickness measurement method according to this embodiment includes the light emitter 43 projecting the emitted light L1 during polishing of the polishing apparatus 10, and the optical condenser 44 condensing the emitted light L1 to obtain a predetermined spot size (D) and project the light onto the film 202, and the light receiver 45 receiving the reflected light L2 reflected from the film 202. In addition, the predetermined spot size (D) is set to be smaller than the minimum width (W1), which is the minimum value of the widths of the respective wiring patterns 204 constituting a plurality of wiring patterns 204.

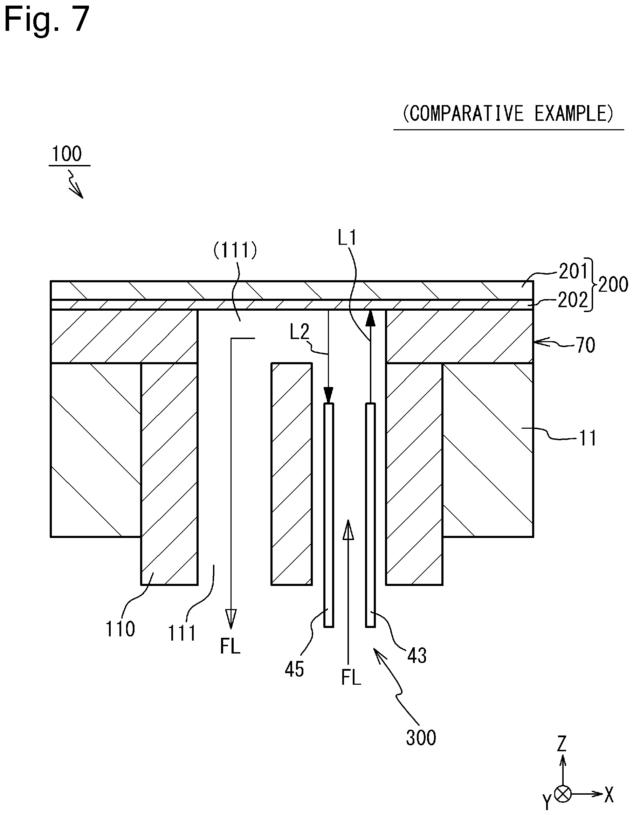

Subsequently, advantageous effects of this embodiment will be described by comparing with a comparative example. Fig. 7 is a cross-sectional view for explaining the configurations of the polishing apparatus 100 and the film thickness measurement apparatus 300 of a comparative example. The polishing apparatus 100 of the comparative example is mainly different from the polishing apparatus 10 according to this embodiment in that the transparent window 72 is not provided, a flow path member 110 is provided, and a film thickness measurement apparatus 300 is provided instead of the film thickness measurement apparatus 30.

A flow path 111 is formed in the flow path member 110. A light-transmitting liquid (FL) such as water passes through the flow path 111. Specifically, the flow path 111 is configured such that the liquid flows from the lower side to the upper side, flows along the surface of the film 202 of the substrate 200, and then flows from the upper side to the lower side. The film thickness measurement apparatus 300 of the comparative example is mainly different from the film thickness measurement apparatus 30 according to this embodiment in that the optical condenser 44 is not provided, and the light emitter 43 and the light receiver 45 are arranged inside the flow path member 110.

In the film thickness measurement apparatus 300 of the comparative example, the emitted light L1 is projected from the light emitter 43 toward the film 202, and the light receiver 45 receives the reflected light L2 reflected from the film 202. In addition, the data processing system of the film thickness measurement apparatus 300 of the comparative example obtains data regarding the film thickness on the basis of the intensity of the reflected light L2 received by the light receiver 45.

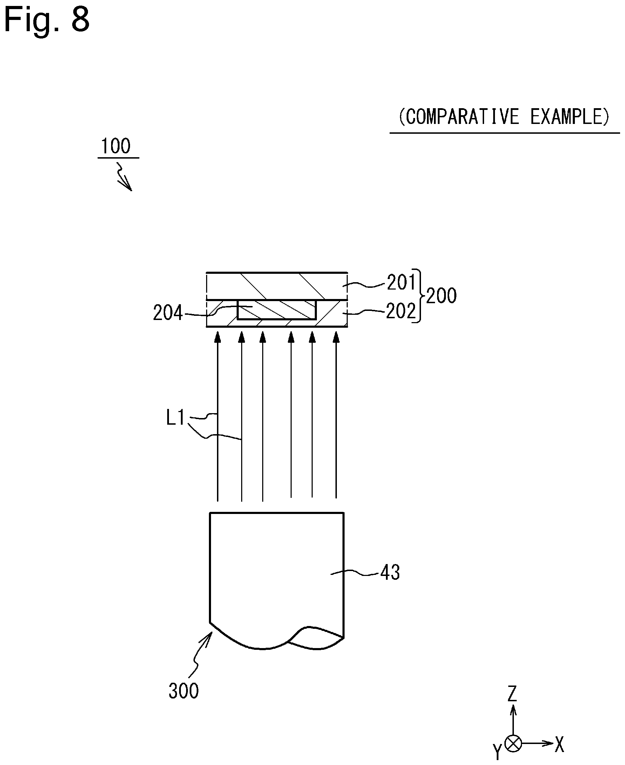

Fig. 8 is a diagram illustrating how the emitted light L1 is projected onto the film 202 in the film thickness measurement apparatus 300 of the comparative example. As illustrated in Fig. 8, the film thickness measurement apparatus 300 of the comparative example does not have the optical condenser 44. Therefore, the emitted light L1 projected from the light emitter 43 is projected onto the film 202 without condensing. In this case, the emitted light L1 is projected not only on the wiring patterns 204 of the film 202 but also on a portion other than the wiring patterns 204 of the film 202. For this reason, in the comparative example, the light amount projected onto the wiring patterns 204 out of the emitted light L1 projected toward the film 202 is not sufficiently large. In the case of such a comparative example, the light amount of the reflected light L2 from the wiring patterns 204 may be insufficient.

In particular, when a film formed of an organic compound (organic insulation film) is employed as the film 202, the film thickness of the film 202 is larger than that of a film formed of an inorganic compound (inorganic insulation film) in many cases. In addition, the light transmittance of the film 202 is also low in many cases. For this reason, in the case of the film thickness measurement apparatus 300 of the comparative example, when an organic insulation film is employed as the film 202, a possibility that the light amount of the reflected light L2 from the wiring patterns 204 is insufficient is particularly high. In addition, when the light amount of the reflected light L2 from the wiring patterns 204 is insufficient, it may be difficult to measure the data regarding the film thickness.

Fig. 9 is a diagram illustrating how the emitted light L1 is projected onto the film 202 in the film thickness measurement apparatus 30 according to this embodiment. In contrast to the comparative example described above, according to this embodiment, the spot size (D) of the emitted light L1 is reduced by the optical condenser 44 to be smaller than the minimum width (W1) of the wiring patterns 204. Therefore, it is possible to increase the light amount of emitted light L1 projected onto the wiring patterns 204. As a result, it is possible to increase the light amount of reflected light L2 from the wiring patterns 204. Therefore, according to this embodiment, it is possible to prevent the reflected light L2 from being insufficient in the light amount even when the film thickness of the film 202 is thick.

As described above, according to this embodiment, it is possible to suppress a shortage of the light amount of the reflected light L2 and measure the data regarding the film thickness during polishing of the polishing apparatus 10 even when the film thickness of the film 202 is thick as in the organic insulation film.

As a result, according to this embodiment, it is possible to measure the polishing end point during polishing and reliably polish the film 202 even when the film thickness of the film 202 is thick (and even when the light transmittance of the film 202 is low) as in the organic insulation film.

According to this embodiment, as described with reference to Figs. 2 and 3, the transparent window 72 is arranged in the polishing pad 70, and the emitted light L1 is projected onto the film 202 through the transparent window 72 while the reflected light L2 is received by the light receiver 45 through the transparent window 72. Therefore, it is possible to measure the film thickness without providing the flow path member 110 unlike the comparative example. Therefore, it is possible to simplify the configuration of the polishing apparatus 10 as compared with the case where the flow path member 110 is provided as in the comparative example. As a result, it is possible to reduce the manufacturing cost of the polishing apparatus 10.

According to this embodiment, as described with reference to Figs. 2 and 3, the tubular jig 42 for installing the sensor head 41 to the polishing table 11 is provided. Therefore, it is possible to easily keep a constant distance from the sensor head 41 to the substrate 200. As a result, it is possible to easily adjust the distance from the optical condenser 44 to the substrate 200 to the focal length.

According to this embodiment, a lens is used as the optical condenser 44. Therefore, it is possible to condense the emitted light L1 by using a simple configuration.

According to this embodiment, the emitted light L1 has an infrared range wavelength and also includes laser light. Therefore, it is possible to increase the light amount of the emitted light L1 projected onto the wiring patterns 204 as compared with, for example, a case where the emitted light L1 is white light. As a result, it is possible to increase the light amount of the reflected light L2 from the wiring patterns 204. This makes it possible to effectively measure the data regarding the film thickness during polishing.

(Modified Example of Embodiment 1)

In Embodiment 1 described above, a constant number is used as the exposure time of the emitted light L1, but the present invention is not limited to this configuration. An appropriate value of the exposure time is set depending on the following parameters: the spot size of the emitted light L1, the spot area of the emitted light L1, a peripheral velocity of the light emitter 43 or the optical condenser 44 during polishing of the film 202, and the area of the wiring pattern. In this regard, the exposure time in this modified example is set on the basis of such parameters. Specifically, the exposure time is set as follows.

That is, assuming that the spot size of the emitted light L1 is D ($\mu$m), the spot area of the emitted light L1 is S ($\mu$m$^2$), the peripheral velocity of the light emitter 43 or the optical condenser 44 during polishing of the film 202 is $\omega$ ($\mu$m/sec), the "minimum area" as a minimum value of areas of respective wiring patterns 204 constituting a plurality of wiring patterns 204 is Smin ($\mu$m$^2$), and the exposure time of the emitted light L1 is t (sec), the exposure time (t) of the emitted light L1 is set so as to satisfy the following Formula (1).

$$(S + D \times \omega \times t) \leq (\alpha \times Smin) \cdots \cdots (1),$$

(where $\alpha$ (coefficient) is a value selected from a range of $0 < \alpha \leq 2$).

Note that, referring to Fig. 4, the minimum area Smin corresponds to the area of the wiring pattern 204 having the minimum width, for example, when the lengths of the respective wiring patterns 204 in the longitudinal direction are the same. If the lengths of the respective wiring patterns 204 in the longitudinal direction are different, the minimum area Smin does not necessarily correspond to the area of the wiring pattern 204 having the minimum width.

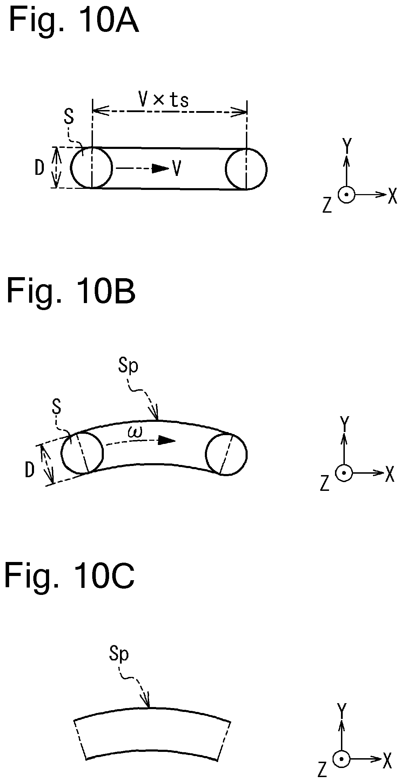

The Formula (1) described above was derived from the following viewpoints. Figs. 10A to 10C are explanatory diagrams for explaining the Formula (1) of this modified example. First, it is assumed that, as illustrated in Fig. 10A, the emitted light L1 having a spot size D ($\mu$m) and a spot area S ($\mu$m$^2$) moves linearly at a velocity V ($\mu$m/sec) for a time ts (sec). In this case, the area of the locus of the emitted light L1 is expressed as "S + D $\times$ V $\times$ ts".

As illustrated in Fig. 10B, during polishing, the spot area S of the emitted light L1 moves in an arc shape relative to the substrate 200. Here, the area of the locus of the emitted light L1 during polishing is defined as an emitted light locus area Sp ($\mu$m$^2$). This emitted light locus area Sp corresponds to a region where the film thickness can be actually measured during polishing (that is, "actual measurement region of the film thickness").

Fig. 10C illustrates a region of the emitted light locus area Sp excluding the arc portions located at both ends in the circumferential direction. Here, since the spot size D is smaller than the width of the wiring pattern 204, the region shown in Fig. 10C can be regarded as a rectangle. As a result, the area of the region illustrated in Fig. 10C can be regarded as being substantially equivalent to the area of "D $\times$ V $\times$ ts" of Fig. 10A.

In this regard, the area of Fig. 10C is considered to be equivalent to the area of "D $\times$ V $\times$ ts" of Fig. 10A, and the "V" is substituted with "$\omega$ (peripheral velocity)". Then, the area of Fig. 10C is expressed as "D $\times$ $\omega$ $\times$ ts". Furthermore, in this formula, the time ts corresponds to the exposure time t of the emitted light L1 at the time of measurement of the film thickness. Therefore, this time ts is set as the exposure time t.

Then, it is recognized that the emitted light locus area Sp of Fig. 10B, that is, the actual measurement region of the film thickness is expressed as "S + D $\times$ $\omega$ $\times$ t". That is, the emitted light locus area Sp (the actual measurement area of the film thickness) is expressed as a value obtained by adding the spot area S of the emitted light L1 to a product of the spot size D of the emitted light L1, the peripheral velocity $\omega$ of the light emitter 43 or the optical condenser 44, and the exposure time t of the emitted light L1. Note that, since it is considered that the "peripheral velocity of the light emitter 43" and the "peripheral velocity of the optical condenser 44" are the same value, either the peripheral velocity of the light emitter 43 or the peripheral velocity of the optical condenser 44 may be used as the peripheral velocity $\omega$ in Formula (1).

The Formula (1) described above defines that the emitted light locus area Sp calculated in this manner is equal to or smaller than $\alpha$ times of the minimum area Smin of the wiring patterns 204 (where $\alpha$ is a value selected from a range of $0 < \alpha \leq 2$). The Formula (1) is derived from such a viewpoint described above.

Note that the value of $\alpha$ used in this Formula (1) is a coefficient set as a value of approximately 1. The value of $\alpha$ may be selected from a range of $0 < \alpha \leq 2$, that is, {0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, and 2.0} as appropriate in consideration of an error in various parameters used in the Formula (1). Note that the upper limit of $\alpha$ is more preferably set to 1.5 or smaller. That is, the value $\alpha$ is more preferably selected from a range of $0 < \alpha \leq 1.5$.

In the Formula (1) described above, S, D, $\omega$, Smin, and $\alpha$ are obtained before setting the exposure time. In addition, on the basis of the Formula (1), the value t satisfying the Formula (1) is obtained, and this value t is set as the exposure time. The exposure time of this modified example is set as described above.

In this modified example described above, the exposure time is set on the basis of the Formula (1). Therefore, it is possible to remarkably reduce the time for which the emitted light L1 is projected onto a portion other than the wiring patterns 204. As a result, it is possible to effectively suppress a shortage of the light amount of the reflected light L2 from the wiring patterns 204 even when the film thickness of the film 202 is thick.

(Embodiment 2)

Subsequently, a film thickness measurement apparatus 30, a polishing apparatus 10, and a film thickness measurement method according to Embodiment 2 of the present invention will be described. Note that like reference numerals denote like elements as in Embodiment 1, and they will not be described. The film thickness measurement apparatus 30 according to this embodiment and the polishing apparatus 10 having the same are different from those described above in that a configuration of the film thickness measurement apparatus 30 of the modified example of Embodiment 1 regarding "the spot size (D) of the emitted light L1 is smaller than the minimum width (W1) of the wiring patterns 204" is not included. Other configurations are similar to those of the modified example of the Embodiment 1.

That is, the film thickness measurement apparatus 30 according to this embodiment has a configuration regarding "the exposure time of the emitted light L1 is set so as to satisfy the Formula (1) described above" instead of the configuration of the film thickness measuring device 30 of Embodiment 1 in which "the spot size (D) of the emitted light L1 is smaller than the minimum width (W1) of the wiring patterns 204". Note that the film thickness measurement method according to this embodiment is a method for measuring the film thickness of the film 202 by using the film thickness measurement apparatus 30 according to this embodiment during polishing of the film 202 using the polishing apparatus 10 according to this embodiment.

According to this embodiment, it is possible to remarkably reduce the time for which the emitted light L1 is projected onto a portion other than the wiring patterns 204 as in the modified example of the Embodiment 1 described above. As a result, even when the film thickness of the film 202 is thick, it is possible to suppress a shortage of the light amount of the reflected light L2 from the wiring patterns 204.

Note that, comparing the modified example of Embodiment 1 with this embodiment, the modified example of Embodiment 1 further includes the configuration regarding "the spot size (D) of the emitted light L1 is smaller than the minimum width (W1) of the wiring patterns 204". Therefore, it is possible to further suppress a shortage of the light amount of the reflected light L2 from the wiring patterns 204.

While the embodiments of the present invention have been described in details hereinbefore, the present invention is not limited to such specific examples, and various modifications or changes may be possible without departing from the scope of the present invention as attached in the claims.

| | |
|---|---|
| 10 | polishing apparatus |
| 11 | polishing table |
| 13 | substrate holding member |
| 20 | polishing controller |
| 30 | film thickness measurement apparatus |
| 40 | sensor module |
| 41 | sensor head |
| 42 | jig |
| 43 | light emitter |
| 44 | optical condenser |
| 45 | light receiver |
| 46 | glass plate |
| 50 | light-source/spectroscope module |
| 51 | light source |
| 52 | spectroscope |
| 60 | data processing system |
| 61 | first data processing device |
| 62 | second data processing device |
| 70 | polishing pad |
| 71 | polishing surface |
| 72 | transparent window |
| 200 | substrate |
| 201 | substrate core |
| 202 | film |
| 203 | wiring pattern |
| 204 | wiring pattern |
| L1 | emitted light |
| L2 | reflected light |
| W1 | minimum width |
| D | spot size |
| S | spot area |
| $\omega$ | peripheral velocity |
| Smin | minimum area |
| t | exposure time |

## Claims

1. A polishing apparatus with a film thickness measurement apparatus (30), the film thickness measurement apparatus (30) is configured to measure the thickness of a film (202) having a plurality of wiring patterns (204) of a substrate (200) during polishing of the film (202), wherein

the polishing apparatus (10) includes a polishing table (11) for holding a polishing pad (70) on which the film (202) is pressed, and the polishing apparatus includes the film (202),

the film thickness measurement apparatus (30) comprises:

a light emitter (43) configured to project an emitted light during polishing of the film (202) by the polishing apparatus (10);

an optical condenser (44) configured to condense the emitted light projected from the light emitter (43) to provide a predetermined spot size and project the light onto the film (202) while the film (202) is pressed against the polishing pad (70); and

a light receiver (45) configured to receive a reflected light reflected from the film (202), and **characterised in that** an exposure time (t), which is a time during which the emitted light is projected to the film (202), is set so as to satisfy a following Formula (1):

$$(S + D \times \omega \times t) \leq (\alpha \times Smin) \cdots \cdots (1),$$

where $\alpha$ is a value selected from a range of $0 < \alpha \leq 2$, and

where the spot size of the emitted light is D ($\mu$m), a spot area of the emitted light is S ($\mu m^2$), a peripheral velocity of the light emitter (43) or the optical condenser (44) during polishing of the film (202) is $\omega$ ($\mu$m/sec), a minimum area as a minimum value of areas of respective wiring patterns (204) constituting the plurality of wiring patterns is Smin ($\mu m^2$), and the exposure time is t (sec).

2. The polishing apparatus and the film thickness measurement apparatus (30) according to claim 1, wherein the predetermined spot size is smaller than a minimum width that is a minimum value of widths of respective wiring patterns (204) constituting the plurality of wiring patterns (204).

3. The polishing apparatus and the film thickness measurement apparatus (30) according to claim 1, wherein

the light emitter (43), the optical condenser (44), and the light receiver (45) are configured to be arranged in the polishing table (11), and

a transparent window (72) through which the emitted light and the reflected light are transmittable is configured to be arranged in a part of the polishing pad (70).

4. The polishing apparatus and the film thickness measurement apparatus (30) according to claim 3, further comprising

a tubular jig (42) configured for installing a sensor head (41) including the light emitter (43), the optical condenser (44), and the light receiver (45) to the polishing table (11), wherein

the tubular jig (42) when connected to the polishing table (11) being configured such that the emitted light and the reflected light pass through the inside of the jig (42).

5. The polishing apparatus and the film thickness measurement apparatus (30) according to claim 1, wherein the optical condenser (44) includes a lens.

6. The polishing apparatus and the film thickness measurement apparatus (30) according to claim 1, wherein the light emitter (43) is configured to emit light that has an infrared range wavelength and is a laser light.

7. The polishing apparatus (10) and the film thickness measurement apparatus (30) according to any one of the preceding claims, the film (202) including a plurality of wiring patterns (204) and the polishing apparatus (10) comprising a polishing pad.

8. A film thickness measurement method comprising measuring a film thickness of a film (202) of a substrate (200) by using the film thickness measurement apparatus (30) according to claim 1 during polishing of the film (202) by the polishing apparatus (10) according to claim 1 for polishing the film (202), the film (202) including a plurality of wiring patterns (204).

9. The film thickness measurement method according to claim 8, wherein the film (202) is an organic insulation film formed of an organic compound.

**Patentansprüche**

1.  Poliervorrichtung mit einer Filmdickenmessvorrichtung (30), wobei die Filmdickenmessvorrichtung (30) konfiguriert ist, um die Dicke eines Films (202) mit einer Vielzahl von Verdrahtungsmustern (204) eines Substrates (200) während des Polierens des Films (202) zu messen, wobei

    die Poliervorrichtung (10) einen Poliertisch (11) zum Halten eines Polierkissens (70) aufweist, auf welches der Film (202) gedrückt wird, und wobei die Poliervorrichtung den Film (202) aufweist,
    wobei die Filmdickenmessvorrichtung (30) Folgendes aufweist:

    einen Lichtemitter (43), der konfiguriert ist, um ein emittiertes Licht während des Polierens des Films (202) durch die Poliervorrichtung (10) zu projizieren;
    einen optischen Kondensor (44), der konfiguriert ist, um das emittierte Licht, welches von dem Lichtemitter (43) projiziert wurde, zu kondensieren bzw. zusammenzuführen, um eine vorbestimmte Punktgröße vorzusehen und das Licht auf den Film (202) zu projizieren, während der Film (202) gegen das Polierkissen (70) gedrückt wird; und
    einen Lichtempfänger (45), der konfiguriert ist, um ein reflektiertes Licht aufzunehmen, welches von dem Film (202) reflektiert wurde, und
    **dadurch gekennzeichnet, dass**
    eine Belichtungszeit (t), die eine Zeit ist, während der emittiertes Licht auf den Film (202) projiziert wird, so festgelegt ist, dass sie folgende Formel (1) erfüllt:

    $$(S + D \times \omega \times t) \leq (\alpha \times S_{min}) \qquad \dots (1),$$

    wobei $\alpha$ ein Wert ist, der aus einem Bereich $0 < \alpha \leq 2$ ausgewählt ist, und
    wobei die Punktgröße des emittierten Lichtes D ($\mu$m) ist, wobei eine Punktfläche des emittierten Lichtes S ($\mu$m$^2$) ist, wobei eine Umfangsgeschwindigkeit des Lichtemitters (43) oder des optischen Kondensors (44) während des Polierens des Films $\omega$ ($\mu$m/s) ist, wobei eine minimale Fläche als ein minimaler Wert von Flächen von jeweiligen Verdrahtungsmustern (204), welche die Vielzahl von Verdrahtungsmustern bilden, S$_{min}$ ($\mu$m$^2$) ist, und wobei die Belichtungszeit t (s) ist.

2.  Poliervorrichtung und Filmdickenmessvorrichtung (30) nach Anspruch 1, wobei die vorbestimmte Punktgröße kleiner ist als eine minimale Breie, die ein Wert von Breiten von jeweiligen Verdrahtungsmustern (204) ist, welche die Vielzahl von Verdrahtungsmustern (204) bilden.

3.  Poliervorrichtung und Filmdickenmessvorrichtung (30) nach Anspruch 1, wobei

    der Lichtemitter (43), der optische Kondensor (44) und der Lichtempfänger (45) so konfiguriert sind, dass sie in dem Poliertisch (11) angeordnet sind, und
    ein transparentes Fenster (72), durch welches das emittierte Licht und das reflektierte Licht hindurchgehen können, so konfiguriert sind, das sie in einem Teil des Polierkissens (70) angeordnet sind.

4.  Poliervorrichtung und Filmdickenmessvorrichtung (30) nach Anspruch 3, die weiter Folgendes aufweisen:

    eine rohrförmige Haltevorrichtung (42), die konfiguriert ist, um einen Sensorkopf (41) zu installieren, der den Lichtemitter (43), den optischen Kondensor (44) und den Lichtempfänger (45) aufweist, an dem Poliertisch (11) zu installieren, wobei
    die rohrförmige Haltevorrichtung (42), wenn sie mit dem Poliertisch (11) verbunden ist, so konfiguriert ist, dass das emittierte Licht und das reflektierte Licht durch das Innere der Haltevorrichtung (42) laufen.

5.  Poliervorrichtung und Filmdickenmessvorrichtung (30) nach Anspruch 1, wobei
    der optische Kondensor (44) eine Linse aufweist.

6.  Poliervorrichtung und Filmdickenmessvorrichtung (30) nach Anspruch 1, wobei
    der Lichtemitter (43) konfiguriert ist, um Licht zu emittieren, welches eine Wellenlänge im Infrarotbereich hat und ein Laserlicht ist.

7. Poliervorrichtung (10) und Filmdickenmessvorrichtung (30) nach einem der vorhergehenden Ansprüche, wobei der Film (202) eine Vielzahl von Verdrahtungsmustern (204)) aufweist, und wobei die Poliervorrichtung (10) ein Polierkissen aufweist.

8. Filmdickenmessverfahren, welches Folgendes aufweist:
Messen einer Filmdicke eines Films (202) eines Substrates (200) durch Verwendung der Filmdickenmessvorrichtung (30) nach Anspruch 1, während des Polierens des Films (202) durch die Poliervorrichtung (10) nach Anspruch 1 zum Polieren des Films (202), wobei der Film (202) eine Vielzahl von Verdrahtungsmustern (204) aufweist.

9. Filmdickenmessverfahren nach Anspruch 8, wobei der Film (202) ein organischer Isolationsfilm ist, der aus einer organischen Verbindung geformt ist.

**Revendications**

1. Appareil de polissage ayant un appareil de mesure de l'épaisseur d'un film (30), l'appareil de mesure de l'épaisseur d'un film (30) est configuré pour mesurer l'épaisseur d'un film (202) ayant une pluralité de motifs de câblage (204) d'un substrat (200) pendant le polissage du film (202), dans lequel

l'appareil de polissage (10) comporte une table de polissage (11) pour maintenir un tampon de polissage (70) sur lequel le film (202) est pressé et l'appareil de polissage comporte le film (202),
l'appareil de mesure de l'épaisseur d'un film (30) comprend :

un émetteur de lumière (43) configuré pour projeter une lumière émise pendant le polissage du film (202) par l'appareil de polissage (10) ;
un condenseur optique (44) configuré pour condenser la lumière émise et projetée depuis l'émetteur de lumière (43) pour fournir une taille de point prédéterminée et projeter la lumière sur le film (202) alors que le film (202) est pressé contre le tampon de polissage (70) ; et
un récepteur de lumière (70) configuré pour recevoir une lumière réfléchie qui est réfléchie par le film (202), et **caractérisé en ce que** un temps d'exposition (t) qui est un temps pendant lequel la lumière émise est projetée vers le film (202), est fixé de sorte à satisfaire la formule (1) suivante :

$$(S + D \times \bullet \times t) \bullet (\bullet \times Smin) \qquad (1),$$

où • est une valeur sélectionnée dans la plage 0 < • • 2), et
où la taille de point prédéterminée de la lumière émise est D ($\mu$m), une surface du point de la lumière émise est S ($\mu$m2), une vitesse périphérique de la lumière émise (43) ou du condenseur optique (44) pendant le polissage du film (202) est • ($\mu$m/sec), une surface minimale, une surface minimale est inférieure à une valeur minimale des surfaces de motifs de câblage respectifs (204) constituant la pluralité de motifs de câblage est Smin ($\mu$m2), et le temps d'exposition est t (sec).

2. Appareil de polissage et appareil de mesure de l'épaisseur d'un film (30) selon la revendication 1, dans lequel la taille de point prédéterminée est plus petite qu'une largeur minimale qui est une valeur minimale de largeurs de motifs de câblage respectifs (204) qui constituent la pluralité de motifs de câblage (204).

3. Appareil de polissage et appareil de mesure de l'épaisseur d'un film (30) selon la revendication 1, dans lequel

l'émetteur de lumière (43), le condenseur optique (44) et le récepteur de lumière (45) sont configurés pour être disposés dans la table de polissage (11), et
une fenêtre transparente (72) à travers laquelle la lumière émise et la lumière réfléchie peuvent être transmises est configurée pour être disposée dans une partie du tampon de polissage (70) .

4. Appareil de polissage et appareil de mesure de l'épaisseur d'un film (30) selon la revendication 3, comprenant en outre

un gabarit tubulaire (42) configuré pour installer une tête de capteur (41) comportant l'émetteur de lumière (43), le condenseur optique (44) et le récepteur de lumière (45) sur la table de polissage (11), dans lequel
le gabarit tubulaire (42), lorsqu'il est connecté à la table de polissage (11), est configuré de sorte que la lumière émise et la lumière réfléchie traversent l'intérieur du gabarit (42) .

5. Appareil de polissage et appareil de mesure de l'épaisseur d'un film (30) selon la revendication 1, dans lequel le condenseur optique (44) comporte une lentille.

6. Appareil de polissage et appareil de mesure de l'épaisseur d'un film (30) selon la revendication 1, dans lequel l'émetteur de lumière (43) est configuré pour émettre une lumière qui a une longueur d'onde dans la plage infrarouge et est une lumière laser.

7. Appareil de polissage (10) et appareil de mesure de l'épaisseur d'un film (30) selon l'une quelconque des revendications précédentes, le film (202) comportant une pluralité de motifs de câblage (204) et l'appareil de polissage (10) comprenant un tampon de polissage.

8. Procédé de mesure d'épaisseur d'un film comprenant la mesure d'une épaisseur de film d'un film (202) d'un substrat (200) en utilisant l'appareil de mesure d'épaisseur de film (30) selon la revendication 1 pendant le polissage du film (202) par l'appareil de polissage (10) selon la revendication 1 pour polir le film (202), le film (202) comportant une pluralité de motifs de câblage (204).

9. Procédé de mesure d'épaisseur d'un film selon la revendication 8, dans lequel
le film (202) est un film isolant organique constitué d'un composé organique.

Fig. 1

Fig. 2

# Fig. 3

# Fig. 4

# Fig. 5

# Fig. 6

# Fig. 7

(COMPARATIVE EXAMPLE)

# Fig. 8

# Fig. 9

Fig. 10A

Fig. 10B

Fig. 10C

**EP 3 909 717 B1**

**Patent documents cited in the description**

- JP H1158225 A
- JP 2010023210 A
- JP 2001235311 A
- JP 10229060 A
- JP 2001021317 A
- JP 6606309 B